**Europäisches Patentamt**

**European Patent Office**

**Office européen des brevets**

(11) Veröffentlichungsnummer : **0 082 503 B2**

(12) # NEUE EUROPÄISCHE PATENTSCHRIFT

(45) Veröffentlichungstag der neuen Patentschrift :
**25.03.92 Patentblatt 92/13**

(51) Int. Cl.⁵ : **C25D 15/00,** C09D 17/00, C09C 3/06, C09C 1/28

(21) Anmeldenummer : **82111738.9**

(22) Anmeldetag : **17.12.82**

(54) **Verfahren zur Herstellung eines Gegenstandes mit einem Metallglanzeffektpigmente enthaltenden Lacküberzug, nach diesem Verfahren hergestellte Gegenstände und die Verwendung von Interferenzpigmenten hierfür.**

(30) Priorität : **19.12.81 DE 3150484**

(43) Veröffentlichungstag der Anmeldung :
**29.06.83 Patentblatt 83/26**

(45) Bekanntmachung des Hinweises auf die Patenterteilung :
**05.03.86 Patentblatt 86/10**

(45) Bekanntmachung des Hinweises auf die Entscheidung über den Einspruch :
**25.03.92 Patentblatt 92/13**

(84) Benannte Vertragsstaaten :
**AT BE CH DE FR GB IT LI NL SE**

(56) Entgegenhaltungen :
**DE-B- 1 467 468**
**US-A- 3 936 405**
**US-A- 3 970 627**
**Derwent-Referat Nr.20251A/11 der JA 78/10638, 1978**
**H.Kittel, Lehrbuch der Lacke und Beschichtungen, Band II,Verlag W.A. Colomb in der H.Heenemann GmbH, Berlin-Oberschwandorf, 1974, Seiten 367-373**
**Technisches Merkblatt "ASP-Aluminiumsilikat-Pigmente-Praxisbewährte Füllstoffe", Nr.64, Georg M.Langer & Co., Mai 1981**

(73) Patentinhaber : **Herberts Gesellschaft mit beschränkter Haftung**
**Christbusch 25**
**W-5600 Wuppertal 2 (DE)**

(72) Erfinder : **Graetz, Hans-Joachim, Dr. Dipl. Chem.**
**Emanuel-Felke-Strasse 41**
**W-5600 Wuppertal 12 (DE)**
Erfinder : **Stranghöner, Dieter, Dr. Dipl. Chem.**
**Hobeuken 36**
**W-4322 Sprockhövel 2 (DE)**
Erfinder : **Bähr, Gabriele**
**Hahnerbergerstrasse 152**
**W-5600 Wuppertal 21 (DE)**
Erfinder : **Saatweber, Dietrich, Dr. Dipl. Chem.**
**Forststrasse 22**
**W-5600 Wuppertal 21 (DE)**
Erfinder : **König, Manfred**
**Ronsdorfer-Strasse 20**
**W-5600 Wuppertal 1 (DE)**

(74) Vertreter : **Türk, Gille, Hrabal**
**Brucknerstrasse 20**
**W-4000 Düsseldorf 13 (DE)**

EP 0 082 503 B2

**Beschreibung**

Die vorliegende Erfindung betriff ein Verfahren zur Herstellung eines Gegenstandes mit einem Metallglanzeffekpigmente enthaltenden Lacküberzug durch Elektrotauchlackierung des eine elektrisch leitende Oberfläche aufweisenden Gegenstandes mit einem wässrigen Elektrotauchlack-Überzugsmittel, enthaltend durch Elektrotauchlackierung abscheidbare organische Bindemittel, Farbpigmente und/oder Farbstoffe und gegebenfalls übliche lacktechnische Zusatzstoffe. Die sogenannte Elektrotauchlackierung (nachfolgend EC-Lackierung genannt) besitzt eine außerordentliche technische Bedeutung. Nach diesem Verfahren werden Gegenstände mit elektrisch leitender Oberfläche, d.h. Gebrauchsgegenstände der verschiedensten Art, insbesondere aus Metall, wie Automobilkarossen und Teile, sonstige Maschinen und Geräte bzw. deren Teile mit Lacküberzügen versehen, die eine große mechanische Beständigkeit aufweisen und einen vorzüglichen Korrosionsschutz ergeben. Den EC-Lacken kann man Farbstoffe und Farbpigmente verschiedener Art zufügen und somit Überzüge mit der gewünschten Farbe herstellen.

Andererseits ist es auf vielen Gebieten wünschenswert, daß Gegenstände mit einem metallisch aussehenden Lacküberzug versehen werden. Dies gilt u. E. für Kraftfahrzeuge oder deren Teile und allgemein sonstige Maschinen und Geräte bzw. deren Teile, z. B. Kameragehäuse, Haushaltsgeräte usw.

In der DE-A 3 003 286 ist ein Verfahren zum Herstellen eines Gegenstandes mit einem metallisch aussehenden Lackuberzug durch EC-Lackierung beschrieben, das dadurch gekennzeichnet ist, daß das Elektrotauchbad als Metallglanzeffektpigmente Metallpulver enthält, die üblicherweise zur Herstellung von sog. Metallic-Überzügen bzw. für Metallic-Lacke verwendet werden. Gemäß der DE-A 3 003 286 soll die Abscheidung ausschließlich auf als Kathode geschaltete Substrate erfolgen, da davon ausgegangen wird, daß aus der DE-C 2 027 427 bereits ein Verfahren zur Herstellung von Aluminiumüberzügen bekannt ist, bei dem als Anode geschaltete Metallgegenstände in einem Elektrotauchbad unter Stromdurchgang beschichtet werden, wobei dieses Elektrotauchbad ebenfalls Metallpulver enthält, wie sie üblicherweise zur Herstellung von Metallic-Lackierungen verwendet werden. Als Metallpulver werden in beiden Fällen bevorzugt sogenannte blättchenförmige Metallpulver, insbesondere Aluminium des sogenannten « Leafing-Typs » eingesetzt. Beide beschriebene Verfahren sind jedoch praktisch unbrauchbar, weil die anodischen als auch die kathodischen EC-Tauchbäder die Metallpulver anlösen bzw. zersetzen, weil in wässrigem Medium selbst bei neutralem pH-Wert die Metallpulver, insbesondere das in der Praxis praktisch ausschließlich verwendete Aluminium, nicht beständig sind. Die bekannten Verfahren haben deshalb in der Praxis keinen Eingang gefunden.

Im Hinblick auf die ganz außerordentlichen technischen Vorteile, die die EC-Lackierung bekanntermaßen bietet, besteht ein großes Bedürfnis dafür, dieses EC-Lackierverfahren auch zur Herstellung von metallisch aussehenden Lacküberzügen einzusetzen. Der vorliegenden Erfindung liegt die Aufgabenstellung zugrunde ein solches Verfahren zu finden, das in der Praxis, d. h. großtechnisch zur Massenlackierung eingesetzt werden kann. Dazu gehört nicht nur die Erzeugung zufriedenstellender Überzüge mit hoher Brillanz und gutem Metallic-Effekt in Laborversuchen, sondern, wie bereits dargelegt, die großtechnische Massenlackierung, wozu es erforderlich ist, daß die EC-Bäder eine gute Stabilität über Wochen und Monate aufweisen.

Es wurde nun gefunden, daß diese Aufgabenstellung, die bisher nicht gelöst werden konnte, wie die eingangs genannten Veröffentlichungen zeigen, in überraschend einfacher Weise dadurch gelöst werden, daß bestimmte an sich bekannte nachfolgend definierte Pigmente für die EC-Lackierung verwendet werden.

Die vorliegende Erfindung betrifft demgemäß ein Verfahren zur Herstellung eines Gegenstandes mit einem Metallglanzeffektpigmente enthaltenden Lacküberzug durch Elektrotauchlackierung des eine elektrisch leitende Oberfläche aufweisenden Gegenstandes mit einem wässrigen Elektrotauchlack-Überzugsmittel enthaltend durch Elektrotauchlackierung abscheidbare organische Bindemittel, Farbpigmente und/oder Farbstoffe und gegebenenfalls übliche lacktechnische Zusatzstoffe, dadurch gekennzeichnet, daß das Elektrotauchlack-Überzugsmittel Interferenzpigmente aus mit Titandioxid beschichteten Glimmerplättchen enthält.

Gegenstände, die gemäß dem Verfahren der Erfindung mit einem Metallglanzeffektpigmente enthaltenden Lacküberzug versehen werden können, sind die gleichen, wie sie mit den bekannten EC-Verfahren lackiert werden können, und wie sie eingangs beispielsweise erwähnt wurden. Es ist auch möglich, die gemäß dem Verfahren der Erfindung mit einem Lacküberzug versehenen Gegenstände noch mit weiteren Lacküberzügen, insbesondere sogenannten Klarlack-Uberzügen zu versehen, falls dies gewünscht ist.

Besondere technische Bedeutung besitzt das Verfahren gemäß der Erfindung jedoch zur Herstellung von Einschicht-Lackierungen, weil gemäß der Erfindung Lacküberzüge mit vorzüglichen Eigenschaften erhalten werden, die für viele Anwendungsgebiete ausreichend sind und keiner weiteren Lackierungen bedürfen. Beispiel hierfür sind Teile von Kraftfahrzeugen, Maschinen und Geräte, die nicht eine Hochglanz-Oberfläche aufweisen müssen, sondern nur einen metallischen Glanz zeigen sollen, wie Industriemaschinen und deren Teile, Küchenmaschinen und deren Teile, Kraftfahrzeugteile, Landmaschinen, Regale, Metallschränke und insbesondere Räder von Kraftfahrzeugen. Kraftfahrzeug-Karosserien, welche in der Regel eine hochglänzende Lackierung aufweisen sollen, erhalten meistens eine Mehrschicht-Lackierung.

Die Elektrotauchlackierung selbst wird in an sich bekannter Weise ausgeführt, wobei ein besonderer Vorteil des Verfahrens gemäß der Erfindung darin liegt, daß sowohl die sogenannte anodische als auch die kathodische Elektrophorese angewendet werden kann. Es ist lediglich erforderlich, daß das organische Bindemittel entsprechend ausgewählt wird. Organische Bindemittel für die anodische und für die kathodische Abscheidung sind in großem Umfang bekannt, und es wird insofern auf den Stand der Technik verwiesen. Es können die bekannten Bindemittel eingesetzt werden. Beispiele für anodische Bindemittel sind wasserlösliche und/oder wasserverdünnbare Harze auf Basis von Alkydharzen, Aminharzen, Phenolharzen, Epoxyharzester, Acrylharzen, Maleinatöle, Maleinatpolymeröle und Mischungen davon, die durch Neutralisation bzw. Teilneutralisation mit alkalischen Agenzien wasserlöslich bzw. wasserverdünnbar gemacht werden. (Vergleiche u. a. DE-A 2 824 418; 2 737 174; 2 553 654; 2 523 877: 2 553 593; 1 546 944; 1 546 952; 2120 962). Eine Übersicht über verwendbare anodische Bindemittel findet sich in dem Buch « Elektrophorese Lacke » von K. Weigel, Wissenschaftliche Verlagsgesellschaft m. b. H. 1967, Seite 36 bis 129.

Als kathodische Bindemittel für die kataphoretische Abscheidung können ebenfalls die auf diesem technischen Gebiet bekannten Bindemittel eingesetzt werden. Es handelt sich hierbei in der Regel um wasserlösliche und/oder wasserverdünnbare Harze auf Basis von aminogruppenhaltigen Epoxid-Derivaten, verkappten Isocyanaten, Aminoacrylaten, Polyestern, Mannich-Basen, Phenolharzen, Polyurethanen, ungesättigten Epoxid-Derivaten, Polyaminoamidharzen bzw. Mischungen davon, die durch Neutralisation bzw. Teilneutralisation mit Säuren wasserlöslich oder wasserverdünnbar gemacht werden. Solche Harze sind z. B. bekannt aus EP-A 4090, DE-O 22 52 536, DE-A 16 44 702, DE-A 22 36 910, DE-A 26 58 016, DE-A 2616 591, EP-A 27 378, US-A 3 922 212, US-A 3 925181, EP-A 12 463, DE-A 27 31 902, 23 20 301, 27 28 470, EP-A 10 766, 25 554 und 25 555, DE-A 31 22 641.

Besonders bevorzugt als anodisch abscheidbare Bindemittel sind die der DE-A 27 37174 und 28 24 418. In der DE-A 27 37 174 ist beschrieben ein wässriges, phenolharzfreies Überzugsmittel, insbesondere für die Elektro-Tauchlackierung, enthaltend ein durch Neutralisation mit einer Base wasserverdünnbares Bindemittel, dadurch gekennzeichnet, daß es als Bindemittel in Kombination enthält A) auf 100 Gew.-Teile von im wesentlichen anhydridfreien carboxylgruppenhaltigen sowie außerdem Ester- und/oder Amid- und/oder Imidgruppen enthaltenden Umsetzungsprodukten mit einem Molekulargewicht von 800 bis 5 000, vorzugsweise 1000 bis 5 000 von a) im wesentlichen carboxylgruppenfreien Olefin-Polymerölen und/oder natürlichen ungesättigten Ölen, wobei letztere oder deren Gemische mit den im wesentlichen carboxylgruppenfreien Olefin-Polymerölen eine Hydrierjodzahl von mehr als 150 und einen Gehalt an gesättigten und/oder einfach ungesättigten Fettsäuren von unter 25 Gew.-% aufweist, mit b) α,ß-ungesättigten Dicarbonsäuren oder deren Anhydriden, insbesondere Maleinsäureanhydrid, gegebenenfalls im Gemisch mit α,ß-ungesättigten Monocarbonsäuren und/oder mit Estern und/oder Amiden und/oder Imiden dieser Säuren, und Überführen der gegebenenfalls vorhandenen Säureanhydridgruppen in Carboxylgruppen und/oder durch Einführen von Ester-, und/oder Amid- und/oder Imidgruppen in die Umsetzungsprodukte, wobei die Umsetzungsprodukte pro Gramm Harz 2.0 bis 3.5 Milliäquivalente, insbesondere 2.4 bis 3.0 Milliäquivalente Carboxylgruppen und bis zu 2.4 Milliäquivalente, insbesondere bis zu 1.6 Milliäquivalente Ester- und/oder Amid- und/oder Imidgruppen enthalten, wobei von 100 Milliäquivalenten der Summe aus Milliäquivalenten Carboxylgruppen und Estergruppen und/oder Amidgruppen und/oder Imidgruppen mindestens 50 Milliäquivalente, vorzugsweise mindestens 60 Milliäquivalente Carboxylgruppen sind, und B) 5 bis 80 Gew.-Teile im wesentlichen carboxylgruppenfreie, gesättigte, langkettige Polymere mit einem Molekulargewicht von 400 bis 10.000, die 1 bis 12 Milliäquivalente aliphatische Alkoholgruppen enthalten, wobei das Verhältnis der Carboxylgruppen der Verbindungen der Komponente A) zu den aliphatischen Alkoholgruppen der Verbindungen der Komponente B) 0.9 bis 15 zu 1, vorzugsweise 2 bis 8 zu 1 beträgt.

In der DE-A 28 24 418 ist beschrieben ein carboxylgruppenhaltiger Polyester mit einer Säurezahl von 30 bis 150, einer Hydroxylzahl von 20 bis 150 und einer Patton' schen Alkydkonstante von 09 bis 1.2, der einkondensiert enthält a) zwei- und/oder mehrwertige aliphatische und/oder cycloaliphatische gesättigte Alkohole, b) aliphatische, aromatische und/oder cycloaliphatische Dicarbonsäuren, c) drei- und/oder mehrbasische cyclische Carbonsäuren, dadurch gekennzeichnet, daß von den drei und/oder mehrbasischen cyclischen Carbonsäuren, die über nur eine Carboxylgruppe an den Polyester gebunden sind, mindestens eine weitere Carboxylgruppe mit aliphatischen und/oder cycloaliphatischen Monoalkoholen mit 3 bis 20 Kohlenstoffatomen und/oder sekundären Aminen mit 6 bis 36 Kohlenstoffatomen kondensiert ist.

Besonders bevorzugt als kathodisch abscheidbare Bindemittel sind die der DE-A-31 22 641 und DE-A-23 20 301. In der DE-A-31 22 641 ist beschrieben ein kathodisch abscheidbares wässriges Elektrotauchlack-Überzugsmittel, das ein Kunstharz-Bindemittel mit Aminogruppen enthält, welches durch Protonisieren mit Säuren wasserlöslich gemacht werden kann, und das gegebenenfalls Pigmente, Füllstoffe. Korrosionsschutzinhibitoren, Lackhilfsmittel, Katalysatoren und in einer Menge bis zu 20 Gew-%, bezogen auf das Gesamtgewicht des Überzugsmittels, organische Lösungsmittel enthält, dadurch gekennzeichnet, daß es als Kunstharz-Bindemit-

EP 0 082 503 B2

tel enthält.

A) 50 bis 99 Gew.-%, bezogen auf die Gesamtmenge des Kunstharz-Bindemittels, von einem oder mehreren Amino-1.2-Epoxiharzen, die im wesentlichen keine Carboxylgruppen aufweisen, wobei das Amino-1.2-Epoxiharz oder im Falle des Vorliegens mehrerer Amino-1.2-Epoxiharze deren Gemisch a) ein mittleres Molekulargewicht (Mn) von 700 bis 10 000 hat, b) pro 1000 Molekulargewichtseinheiten 0.2 bis 3.6 seiten- oder endständige ethylenische Doppelbindungen enthält entsprechend einer Hydrierjodzahl von 5 bis 90, c) primäre und/oder sekundäre alkoholische Hydroxylgruppen enthält entsprechend einer Hydroxylzahl von 30 bis 450, und d) eine Aminzahl von 30 bis 150 aufweist,

B) 1 bis 50 Gew.-% eines nicht-sauren Polyesters einer Polycarbonsäure, der mindestens 2 endständige oder seitenständige, gesättigte und/oder ungesättigte ß-Hydroxiestergruppen pro Molekül enthält, und ein mittleres Molekulargewicht von etwa 1500 bis 10 000 hat, und

C) Umesterungskatalysatoren für die thermische Vernetzung von (A) und (B) bei Temperaturen über 140°C. In der DE-A 23 20 301 ist beschrieben im wesentlichen epoxidgruppenfreies Lackbindemittel, dadurch gekennzeichnet, daß es durch Umsetzung von

a) Mannichbasen aus (a$_1$) kondensierten Phenoler, (a$_2$) mindestens einem sekundären Amin, das mindestens eine Hydroxyalkylgruppe enthält, oder einem Gemisch aus einem derartigen sekundären Amin mit einem anderen sekundären oder primären Amin und (a$_3$) Formaldehyd oder einer Formaldehyd liefernden Verbindung mit

b) mindestens einem Epoxidharz erhalten worden ist.

Die Bindemittel werden in bekannter Weise wasserverdünnbar bzw. wasserlöslich gemacht. Bei den anodisch abscheidbaren Bindemitteln geschieht dies durch Zusatz von alkalischen Agenzien wie Aminen, Alkanolaminen, Ammoniak, Alkalihydroxyden (in der Praxis Natronlauge bzw. Kalilauge).

Die kathodisch abscheidbaren Bindemittel werden durch Zugabe von Säuren wasserlöslich bzw. wasserverdünnbar gemacht. Auch insofern wird auf den Stand der Technik verwiesen. Es können organische und anorganische Säuren eingesetzt werden. Beispiele für anorganische Säuren sind Salzsäure, Schwefelsäure, Phosphorsäure, Kohlensäure. Beispiele für organische Säuren sind Ameisensäure, Essigsäure, Propionsäure, Dimethylolpropionsäure, Zitronensäure, Milchsäure, Äpfelsäure, Maleinsäure, Fumarsäure sowie die Halbester der Fumarsäure, Maleinsäure und Phthalsäure mit einwertigen oder mehrwertigen niederen aliphatischen Alkoholen mit 1 bis 4 Kohlenstoffatomen, insbesondere 1 bis 3 Kohlenstoffatomen. Gemische der Neutralisationsmittel können zur Erzielung spezieller Effekte zweckmäßig sein. Technisch bedeutsam sind insbesondere Ameisensäure, Essigsäure und Milchsäure.

Es ist auch möglich Emulgatoren einzusetzen. die an der jeweiligen Elektrode ihre Emulgatorwirkung verlieren und es dadurch zu einer Abscheidung kommt (vergleiche DE-A 2313 534).

Die Überzugsmittel können, wie dies auch aus dem Stand der Technik bekannt ist, neben den wasserlöslichen und wasserverdünnbaren Harzen auch wasserunlösliche Harze zusätzlich enthalten, die bei der elektrischen Abscheidung mitgeschleppt und mitabgeschieden werden. Beispiele hierfür sind Aminoaldehydharze, wie Melaminharze oder Harnstoff-Formaldehydharze, Phenolharze, Butadien-Styrol-Latices, Vinylchlorid- und Vinylidenchlorid-Homopolymer- und -Copolymer-Latices, Polyolefinharze, Fluorkohlenstoffharze, bis-Phenolglycidylätherharze, Dicychlodiepoxycarboxylatharze, gesättigte und ungesättigte Kohlenwasserstoffharz-Dispersionen, harzartige Polyole, dit mit Carbonsäuren verestert sein können, Weichmacher usw. (vergleiche US-A 3 922 212).

Übliche lacktechnische Zusatzmittel, die gegebenenfalls verwendet werden können, sind Füllstoffe, Härtungskatalysatoren, Mittel zur Verbesserung des Verlaufs, Haftverbesserungsmittel, Antischaummittel und dergleichen. Es können auch geringe Menge blättchenförmiges Aluminiumpulver zugesetzt werden, sofern die Menge so gering gehalten wird, daß die Stabilität des Bades nicht wesentlich beeinträchtigt wird.

Das wesentliche Merkmal des Verfahrens der Erfindung liegt darin, daß das EC-Überzugsmittel die oben definierten Interferenzpigmente enthält. Diese sind an sich bekannt (vergleiche u. a. DE-B 1 467 468 und DE-A 1959 998). Es handelt sich um Glimmerschuppenpigmente, bei denen sich auf durchscheinenden Glimmerschuppen ein Überzug aus Titandioxid befindet. Die Beschichtung mit Titandioxid weist eine solche Stärke auf, daß eine Interferenz in einer bestimmten gewünschten Wellenlänge oder einem gewünschten Wellenlängenbereich erzeugt wird. Die Glimmerschuppen weisen eine verhältnismäßig große Breite und Länge im Verhältnis zur Dicke auf. Die Länge der einzelnen Glimmerschuppen liegt im Bereich von etwa 5 bis 150 µm, die Breite im Bereich von etwa 5 bis 150 µm und die Dicke im Bereich von etwa 150 bis 400 nm. Die Stärke der Titandioxidbeschichtung liegt im Bereich von etwa 40 bis 300 nm.

Die Länge bzw. Breite der Glimmerplättchen ist wesentlich größer als deren Dicke. Während die großen Flächen eine positive Ladung aufweisen, haben die schmalen Seitenflächen eine negative Ladung. Dies hat zur Folge, daß an den Schmalseiten dieser Plättchen praktisch keine Beschichtung mit Titandioxid erfolgt.

Geeignete Interferenzpigmente sind z. B. die als Handelsprodukte von der Firma Merck, Darmstadt, Bun-

4

desrepublik Deutschland, unter dem eingetragene Warenzeichen Iriodin vertriebenen Produkte mit den Typennummern 101, 120, 121, 105, 205, 215, 217, 225, 235 und 400.

Es ist außerordentlich überraschend, daß trotz dieser unterschiedlichen Ladungen die Glimmerplättchen sowohl bei kathodischer als auch bei anodischer Abscheidung so abgeschieden werden, daß sie im abgeschiedenen Lacküberzug eine weitgehend einheitliche Ausrichtung erfahren, so daß der Metallic-Effekt bzw. ein metallisches Aussehen des Lacküberzuges erreicht wird.

Die EC-Bäder, die für das Verfahren gemäß der Erfindung eingesetzt werden, besitzen eine ausgezeichnete Badstabilität über Wochen und Monate. Die großtechnische Massenlackierung ist deshalb in einwandfreier Weise durchführbar. Die abgeschiedenen Schichten weisen eine gute Korrosions-beständigkeit und Wetterfestigkeit auf, so daß auch stark beanspruchte Gegenstände, wie Autoräder, in vorzüglicher Weise gemäß dem Verfahren der Erfindung beschichtet werden können. Die Eigenschaften der Lacküberzüge sind so gut, daß in der Regel ein weiterer Lacküberzug, insbesondere ein Klarlacküberzug, aus Gründen des Korrosionsschutzes bzw. der Beständigkeit nicht erforderlich ist. Insbesondere zur Erzielung hochglänzender Oberflächen kann jedoch noch ein weiterer Lacküberzug, z. B. ein sogenannter Klarlack gemäß dem Stand der Technik aufgebracht werden.

Die Menge an Interferenzpigment beträgt 3 bis 35 Gramm bezogen auf 100 Gramm Bindemittel. Bevorzugt beträgt die Menge mindestens 10 Gramm und höchstens 25 Gramm, bezogen auf 100 Gramm Bindemittel (Festkörper).

Zur Erzielung des metallischen Aussehens mit der gewünschten Farbe wird dem Überzugsmittel ein entsprechendes Farbpigment und/oder Farbstoff zugesetzt. Dabei ist es sowohl möglich, eine Farbgebung einzustellen, die dem Aussehen einer Metalloberfläche entspricht. als auch der Oberfläche beliebige Farbnuancen zu verleihen, die einen metallischen Glanz aufweisen. Zur Erzeugung eines Silberglanzes wird hierfür Ruß verwendet. Zur Erzielung von Goldglanz werden organische Gelb- oder Rot-pigmente verwendet (z. B. C.I. 77491 und 71100). Zur Herstellung eines Kupferglanzes eignet sich Eisenoxid-Rotpigment.

Das Verhältnis zwischen Interferenzpigment und die Farbgebung verursachenden Farbpigmenten und-/oder Farbstoffen liegt im Bereich von etwa 500 : 1 bis 2 : 1. Der gewünschte Farbeffekt ist maßgeblich für das jeweils ausgewählte Mengenverhältnis.

Die Schichtstärke der gemäß der Erfindung hergestellten Überzüge liegt in der Regel im Bereich von etwa 5 bis 50 μm, vorzugsweise im Bereich von etwa 15 bis 40 μm. Die Bedingungen für die elektrische Abscheidung entsprechend denjenigen des Stands der Technik. Es werden die üblichen Gleichspannungen von 20 bis 500 Volt, vorzugsweise 50 bis 350 Volt angewandt. Die Temperatur liegt, ebenfalls wie gemäß dem Stand der Technik, zweckmäßig im Bereich von etwa 20 bis 45°C. Die Abscheidungsdauer beträgt 10 Sekunden bis 5 Minuten. Nach dem Verlassen des EC-Bades wird, in der Regel mit entionisiertem Wasser, abgespült, dann wird durch Erhitzen auf erhöhte Temperatur gehärtet, wobei die Temperaturen abhängig sind von dem jeweils eingesetzten Bindemittel. Einbrennzeiten zwischen 10 bis 60 Minuten bei Temperaturen zwischen 80 bis 220°C sind, ebenfalls wie gemäß dem Stand der Technik, möglich.

Die EC-Bäder können, ebenfalls wie gemäß dem Stand der Technik, neben Wasser auch noch organische Lösungsmittel in geringen Mengen bis zu etwa 20 Volumen-% zur Verbesserung der Abscheidung enthalten, wie niedere aliphatische Alkohole mit ein oder zwei Hydroxylgruppen und 1 bis 4 Kohlenstoffatomen und deren Ether (Isopropanol, Ethanol, n-Butanol, Ethylenglykol, Ethylenglykolether wie Ethylenglykol, Propylenglykol, Ethylenglykolmonoethyleteher, Ethylenglykolmono-propylether, Ethylenglykolmono-n-butylether), sowie aliphatische und/oder aromatische Kohlenwasserstoffe, Ester, Ether, Etherester usw.

Die Bestandteile des EC-Bades können in üblicher Weise miteinander vermischt bzw. zum Bad gegeben werden. Es ist jedoch erforderlich, darauf zu achten, daß die gemäß der Erfindung verwendeten Interferenzpigmente dabei ihre geometrische Form nicht verlieren. Der Einsatz von z. B. Sandmühlen, wie sie üblicherweise bei der Herstellung von pigmenthaltigen Lacken verwendet werden, ist deshalb nicht möglich. Dies stellt aber keinen Nachteil dar, da die Interferenzpigmente in einfacher Weise z. B. mittels eines sogenannten Dissolver eingearbeitet werden können.

Die Erfindung wird anhand der folgenden Beispiele erläutert:

Herstellung der anionischen Bindemittels A1)

Wie in der DE-A-2 824 418, Herstellungsbeispiel A, beschrieben, werden 654 g Neopentylglykol und 136 g Trimethylolpropan in einem 2 Liter-Kolben mit Rührer und Kolonne aufgeschmolzen. Danach werden 271 g Isophthalsäure und 125 g Trimellithsäureanhydrid zugegeben. Unter Inertgas wird so auf 210°C geheizt, daß die Kolonnenkopftemperatur 102°C nicht übersteigt. Bei einer Säurezahl von 12 wird auf 150 °C gekühlt. Anschließend wird ein Gemisch von 536 g Isodekanol und 778 g Trimellithsäureanhydrid zugegeben. Es wird auf 180 °C aufgeheizt und nach Erreichen einer Säurezahl von etwa 50 und Kühlen auf 110°C vorsichtig mit einem Gemisch auf 80 Gew.-% Butanol-2 und 20 Gew.-% Ethylenglykolmonobutylether auf einen Festkörper von etwa 75 % verdünnt.

| | |
|---|---|
| Säurezahl : | 47 mg KOH/g Festharz |
| Hydroxylzahl (berechnet) : | 90 mg KOH/g Festharz |
| Viskosität : | 661 mPas, gemessen bei 25 °C nach Verdünnen auf 50 Gew.-% Festkörper mit Ethylenglykol monobutylether |
| Festkörpergehalt : | 75 Gew.-%, gemessen durch 15-minütiges Erhitzen auf 185 °C im Umlufttrockenschrank |

Herstellung des anionischen Bindemittels A2)

Grundharz:

Nach DE-A-2 737 174 (Versuchsreihe B) werden 99,5 g technisches Xylol, 0,5 g Alterungsschutzmittel von Typ Diarylamin, 350 g Butadienöl und 450 g Sojaöl unter Überleiten von Stickstoff auf 80 bis 100 °C erwärmt.

Nach Zusatz von 200g Maleinsäureanhydrid wird auf eine Temperatur von 195°C aufgeheizt und diese Temperatur gehalten, bis kein freies Maleinsäureanhydrid mehr nachweisbar ist. Bei dieser Temperatur halten, bis eine Viskosität von ca. 1300 mPas. gemessen 75 %-ig in Xylol bei 25 °C, erhalten wird. Abdestillieren des Lösungsmittels unter Vakuum.

Zusatzharz

1000 g sekundäres Butanol werden auf 100 °C aufgeheizt und in 4 Stunden folgendes Gemisch zugetropft :

636 g Methylmethycrylat
344 g Hydroxiethylmethacrylat
20 g Azobisisobuttersäurenitril

Zum Auspolymerisieren werden in Abständen von 1 Stunde je 3 ml tert. Butylperoctoat zugegeben und 3 Stunden nacherhitzt.

| | |
|---|---|
| Festkörpergehalt : | 50,4 Gew.-% (40 Min. 180 °C) |
| Viskosität : | 12.2 Pas (45 %-ig in sec.-Butanol) |
| Hydroxylzahl (berechnet) : | 151 mg KOH/g |

Herstellung des kationischen Bindemittels A3)

Gemäß EP-A-12 463, Seite 17, Beispiel I (b) werden 391 g Diethanolamin, 189 g 3-(N,N-dimethylamino) propylamin und 1147 g eines Adduktes aus 1,6-Diaminohexan und Cardura E 10 (eingetragenes Warenzeichen) (Molverhältnis 1 : 2) zu 5 274 g Epoxidharz auf Basis Bisphenol A (Epoxid-Aquivalentgewicht ca. 472) in 2 999 g Ethylenglykolmonobutylether gegeben. Die Mischung wird 4 Stunden lang unter Rühren bei 85 bis 90 °C und dann eine Stunde lang bei 120 °C gehalten.

| | |
|---|---|
| Festkörpergehalt : | 70 Gew.-% gemessen durch 15-minütiges Erwärmen auf 185 °C in einem Umlufttrockenschrank |
| Epoxid-Äquivalentgewicht : | > 10 000 |

Herstellung des kationischen Bindemittels A4)

Wie in der DE-A-2 732 902, Spalte 9, Beispiel A2) beschrieben, werden 2 2 62 g Epoxidharz auf Bisphenol A-Basis (Epoxid-Äquivalentgewicht ca. 260) in 2 023 g Diethylenglykoldimethylether bei 60 bis 70 °C gelöst und nach Zugabe von 0,8 g Hydrochinon und 2 453 g eines Halbesters aus Tetrahydrophthalsäureanhydrid und Hydroxiethylmethacrylat auf 100 bis 110 °C erwärmt. Diese Temperatur wird so lange gehalten, bis die Säurezahl unter 3 mg KOH/g gesunken ist. Dann wird das Reaktionsprodukt mit 3 262 g der 70 %igen Lösung eines Monoisocyanats aus Toluylendiisocyanat und Dimethylethanolamin (Molverhältnis 1 : 1 ) in Diethylenglykoldimethylether umgesetzt.

| Festkörpergehalt : | 70 Gew.-% gemessen durch 15-minütiges Erwärmen auf 185 °C in einem Umlufttrockenschrank |
|---|---|

**Herstellung des kationischen Bindemittels A5)**

1200 g der Lösung A3) werden mit 800 g der Lösung A4) 15 Minuten lang durch gutes Rühren vermischt.

| Festkörpergehalt : | 70 Gew.-% gemessen durch 15-minütiges Erwärmen auf 185 °C in einem Umlufttrockenschrank |
|---|---|

**Herstellung des kationischen Bindemittels A6)**

Wie auch in der DE-A-2 320 301 beschrieben, werden zu 1 100 Teilen Bisphenol A, 917,5 Teilen Diethanolamin, 332,5 Teilen Di-2-methoxyethylamin und 375 Teilen Isopropanol bei 20 bis 25 °C 984 Teile Formalin 40 %ig zugetropft. Man läßt eine Stunde bei 30 °C rühren und erhitzt dann 3 Stunden auf 80 °C. Unter schwachem Vakuum werden Isopropanol und Wasser abdestilliert. Man erhält eine gelbe harzähnliche Masse mit einem Festgehalt von 91 %. 2 542 Teile dieses Mannichkondensationsproduktes werden mit 70 Teilen Paraformaldehyd versetzt und 9 bis 10 Stunden bei 70 °C kondensiert. Es wird eine viskose Masse mit einem Festgehalt von 90 % erhalten.

**Vernetzungsmittel B1)**

Das Vernetzungsmittel Cymel 1116 (eingetragenes Warenzeichen) ist ein mit Methanol und Ethanol mischverethertes Melaminharz vom Hexalkoximethyl-Typ. Der Festkörpergehalt beträgt 98 Gew.-% (ermittelt durch 60-minütiges Erhitzen auf 150 °C in einem Umlufttrockenschrank).

**Herstellung des Vernetzungsmittels B2)**

Gemäß EP-12 463, S. 17, Beispiel II (a), werden 781 g Trimellithsäureanhydrid bei 100 °C in 1976 g Ethylenglykolmonobutylether gelöst und mit 2 236 g Cardura E 10 (eingetragenes Warenzeichen) sowie mit 7 g Benzyldimethylamin vermischt. Die Mischung wird auf 120°C unter Rühren erwärmt und gehalten, bis die Säurezahl unter 1,1 mg KOH/g gesunken ist.

| Festkörpergehalt : | 70,7 Gew.-% (60 Minuten 125 °C) |
|---|---|
| Säurezahl : | 0,7 mg KOH/g Festharz |
| Epoxid-Äquivalentgewicht : | > 10 000 |

**Beispiel 1 : Anodische Abscheidung**

**1.1 Beschichtung silberfarbig**

Das anodisch abscheidbare Bindemittel Al) wird mit dem Vernetzungsmittel B1) im Verhältnis 8: 2 vermischt.

In 90,77 Gew.-Teile dieses Bindemittelgemisches werden als effektgebende Pigmente insgesamt 9,08 Gew.-Teile mit Rutil beschichteter Glimmerplättchen Iriodin-Perlglanzpigmente) gegeben. Diese Menge setzt sich aus 8,07 Gew.-Teilen Iriodin 121 (Rutil Glanzsatin) (eingetragenes Warenzeichen) und 1,01 Gew.-Teilen Iriodin 205 (eingetragenes Warenzeichen) zusammen.

Das Beschichtungsmaterial wird durch Zusatz von 0,15 Gew.-Teilen einer Schwarzpaste auf die gewünschte Farbnuance getönt. Diese Paste besteht aus 71,42 Gew.-% des anodisch abscheidbaren Bindemittels A1), 17,85 Gew.-% n-Butanol, 8,95 Gew.-% Ethylenglykolmonobutylether sowie 1,78 Gew.-% Russ FW-200 (eingetragenes Warenzeichen).

Alle Komponenten des Beschichtungsmaterials werden gründlich vermischt und mit 11,72 Gew.-Teilen einer 55,6 %igen Lösung von Diisopropanolamin in vollentsalztem Wasser neutralisiert.

Diese Mischung wird mit vollentsalztem Wasser auf einen Festkörpergehalt von 10 % verdünnt.

In dieses Beschichtungsbad wird als Anode ein blankes Stahlblech eingetaucht und bei einer Temperatur von 25°C 2 Minuten bei 200 V Gleichspannung beschichtet. Anschließend wird das beschichtete Blech mit Wasser abgespült, mit Luft abgeblasen und die Beschichtung 25 Minuten bei 180 °C eingebrannt. Auf diese Weise erhält man gleichmäßige, silbermetallisch aussehende Überzüge mit guten mechanischen Eigenschaften in einer Schichtstärke zwischen 28 und 30 μm.

## 1.2 Beschichtung kupferfarbig

Wie in 1.1 beschrieben, wird zunächst das anodische Bindemittel A1) im Verhältnis 8: 2 mit dem Vernetzungsmittel B1) vermischt. .

80,61 Gew.-Teile dieses Bindemittelgemisches werden mit insgesamt 7,74 Gew.-Teilen Iriodin-Perlglanzpigmenten versetzt (5,16 Gew.-Teile Iriodin 205; 2,5 Gew.-Teile Iriodin 101 Rutilsilber) (eingetragenes Warenzeichen) und durch Zusatz von folgenden Farbpasten aud den gewünschten Farbton gebracht :

5,38 Gew.-Teile einer Paste, bestehend aus 76,19 Gew.-% des Bindemittels A1), 4,76 Gew.-% Sicotransrot L 2715 D (eingetragenes Warenzeichen), 9,52 Gew.-% sec.-Butanol und 9,53 Gew.-% Ethylenglykolmonobutylether,

1,29 Gew.-Teile der in 1.1 beschriebenen Russ FW-200-Paste,

3,87 Gew.-Teile einer Paste aus 66,80 Gew.-% des Bindemittels A1), 16,60 Gew.-% Bayferrox 180 M (eingetragenes Warenzeichen), 8,30 Gew.-% sec.-Butanol sowie 8,30 Gew.-% Ethylenglykolmonobutylether, 1,11 Gew.-Teile Colanylrot TG (eingetragenes Warenzeichen).

Alle Komponenten werden gründlich vermischt und mit 11,72 Gew.-Teilen einer 55,6 %igen Lösung von Diisopropanol in vollentsalztem Wasser neutralisiert.

Wie in 1.1 beschrieben, wird die Mischung auf einen Festkörpergehalt von 10 % verdünnt, und ein blankes Stahlblech bei 25 °C, als Anode geschaltet, 2 Minuten bei 200 V Gleichspannung beschichtet. Anschließend wird, wie in 1.1 beschrieben, abgespült, abgeblasen und der Überzug eingebrannt. Die so erhaltenen Beschichtungenbesitzen ein gleichmäßiges kupfermetallisches Aussehen und haben gute mechanische Eigenschaften. Die Schichtstärken liegen zwischen 28 und 30 μm.

## 1.3 Beschichtung messingfarbig

Zu 92,35 Gew.-Teilen des wie in 1.1 beschrieben hergestellten Bindungsmittelgemisches aus Bindemittel A1) und Vernetzungsmittel B1) werden 7,18 Gew.-Teile Iriodin 205 gegeben. Zur Erzielung eines messingartigen Farbtons werden folgende Farbpasten zugesetzt:

0,10 Gew.-Teile der in 1.1 beschriebenen Russ FW-200-paste,

0,20 Gew.-Teile Colanylgelb HR (eingetragenes Warenzeichen),

0,07 Gew.-Teile Colanylrot TG,

0,10 Gew.-Teile Colanylschwarz PR (eingetragenes Warenzeichen).

Nach Zugabe von 0,43 Gew.-Teile Netzmittel (50%ige Lösung von Surfynol 104 in Propylenglykol) (eingetragenes Warenzeichen) werden alle Komponenten gründlich vermischt und mit 11,72 Gew.-Teilen einer 55,6 %igen Lösung von Diisopropanolamin in vollentsalztem Wasser neutralisiert.

Die anodische Beschichtung eines blanken Stahlblechs erfolgt wie in 1.1 in einem auf einen Festkörpergehalt von 10 % verdünnten Bad. Die Gleichspannung beträgt 200 V. Es wird 2 Minuten bei 25 °C beschichtet. Die abgespülten, abgeblasenen und bei 180 °C 25 Minuten lang eingebrannten Bleche weisen eine Beschichtungsstärke von etwa 33 μm auf. Sie zeigen einen gleichmäßigen messingmetallischen Oberflächeneffekt und besitzen gute mechanische Eigenschaften.

## 1.4 Beschichtung zinnfarbig

62,12 Gew.-Teile des in 1.1 beschriebenen Bindemittels, bestehend aus A1) und B1), werden mit 6,21 Gew.-Teilen Iriodin 101 Rutilsilber, 6,83 Gew.-Teilen der in 1.1 beschriebenen Russ FW-200-paste, 12,42 Gew.-Teilen sec.-Butanol und 12,42 Gew.-Teilen Ethylenglykolmonobutylether vermischt und mit 11,72 Gew.-Teilen einer 55,6 %igen Lösung von Diisopropanolamin in vollentsalztem Wasser neutralisiert.

Die Mischung wird auf einem Festkörpergehalt von 10% verdünnt und das als Anode geschaltete Stahlblech 30 Sekunden bei 100 V und 25 °C beschichtet. Nach dem Abspülen, Abblasen und Einbrennen bei 180°C für 25 Minuten erhält man eine etwa 31 μm starke, zinnartige Beschichtung mit hervorragenden Oberflächeneigenschaften.

## 1.5 Beschichtung bronzefarbig

Eine gutvermengte Mischung aus 86,19 Gew.-Teilen des in 1.1 beschriebenen Bindemittels aus A1) und B1), 8,05 Gew.-Teilen Iriodin 205, 2,30 Gew.-Teilen der in 1.1 beschriebenen Russ FW-200-Paste, 2,30 Gew.-Teilen der in 1.1 beschriebenen Bayferrox 180-M-Paste, 0,35 Gew.-Teilen Colanylgelb G 30, 0,69 Gew,-Teilen Colanylrot TG und 0,12 Gew.-Teilen Colanylschwarz PR wird mit 11,72 Gew.-Teilen der 55,6 %igen Diisopropanolamin-Lösung neutralisiert und mit vollentsalztem Wasser auf einen Festkörpergehalt von 10 % verdünnt.

Bei der anodischen Beschichtung eines Stahlbleches bei 100 V Gleichspannung für 2 Minuten und einer Badtemperatur von 25°C erhält man nach den in 1.1 angegebenen Spül- und Einbrennbedingungen einen bronzemetallisch aussehenden Überzug mit guten mechanischen Eigenschaften in einer Schichtstärke von etwa 18 μm.

## 1.6 Beschichtung silberfarbig

663 Gew.-Teile des bei der Herstellung des Bindemittels A2) beschriebenen Grundharzes werden mit 22 Gew.-Teilen Wasser 3 Stunden bei 80 °C vorhydrolisiert und 232 Gew.-Teile des bei A2) beschriebenen Zusatzharzes eingerührt. Zur Farbgebung werden 80 Gew.-Teile Iriodin 101 Rutilsilber und 1 Gew.-Teil Colanylschwarz PR zugesetzt. Die Mischung wird im Abstand von 15 Minuten portionsweise mit folgenden Gemischen verdünnt:

Gemisch aus 21 Gew.-Teilen Triethylamin, 15 Gew.-Teilen Isopropanolamin und 10 Gew.-Teilen Wasser, Gemisch aus 36,6 Gew.-Teilen Wasser und 0,4 Gew.-Teilen Hydrochinon.

200 Gew.-Teile (bez. auf Festkörper) dieses Nachfüllkonzentrates werden mit 14,8 Gew.-Teilen Triethylamin und soviel destilliertem Wasser verdünnt, daß eine 10 Gew.-%ige Lösung entsteht.

Ein als Anode geschaltetes, blankes Stahlblech wird bei einer Badtemperatur von 30 °C 2 Minuten lang bei einer Gleichspannung von 105 V beschichtet. Nach den üblichen Spül- und Abblasvorgängen wird 25 Minuten bei 175°C eingebrannt, und man erhält eine glatte silbermetallisch aussehende Beschichtung mit guten mechanischen Eigenschaften in einer Schichtstärke von 25 μm.

## 1.7 Beschichtung metallic-grün

68,11 Gew.-Teile des in 1.1 beschriebenen Bindemittels, bestehend aus A1) und B1), werden mit 10,63 Gew.-Teilen Iriodin 205, 10,63 Gew.-Teilen Ethylenglykolmonobutylether und 10,63 Gew.-Teilen einer Grünpaste-bestehend aus 74,64 Gew.-% des Bindemittels A1), 10,46 Gew.-% Heliogengrün 8721 L (eingetragenes Warenzeichen) und 14,92 Gew.-% Ethylenglykolmonobutylether - vermischt und mit einer 55,6 %igen Lösung von Diisopropanolamin in vollentsalztem Wasser neutralisiert.

Die Mischung wird auf einen Festkörpergehalt von 10% verdünnt und das als Anode geschaltete Stahlblech 1 Minute bei 100 V und 25 °C beschichtet. Nach dem Abspülen, Abblasen und Einbrennen bei 180°C für 25 Minuten erhält man eine ca. 26 μm starke, metallic grüne Beschichtung mit hervorragenden Oberflächeneigenschaften.

## 2. Kathodische Abscheidung

## 2.1 Beschichtung silberfarbig

Das Bindemittel für kathodische Abscheidung setzt sich wie folgt zusammen:

Das mit Ethylenglykolmonobutylether auf einen Festkörpergehalt von 60 Gew.-% eingestellte Bindemittel A3) wird mit dem Vernetzungsmittel B2) (Festkörper 80 Gew.-%) im Verhältnis 4 : 1 gemischt.

85,4 Gew.-Teile dieses Bindemittelgemisches werden mit 6,45 Gew.-Teilen Octa-Soligen-Blei 31 flüssig (eingetragenes Warenzeichen) versetzt und als effektgebendes Pigment 8,00 Gew.-Teile Iriodin 101 Rutilsilber eingerührt. Durch Zusatz von 0,15 Gew.-Teilen einer Schwarzpaste (98,2 Gew.-% Filmbildner A3) sowie 1,8 Gew.-% Russ FW-200) wird das Gemisch auf die gewünschte Farbe getönt.

Alle Komponenten werden gut verrührt und mit 2,44 Gew.-Teilen 50 %iger Ameisensäure neutralisiert. Das neutralisierte Gemisch wird mit vollentsalztem Wasser auf einen Festkörpergehalt von 10 % verdünnt und in diesem Bad ein als Kathode geschaltetes zinkphosphatiertes Stahlblech 3 Minuten bei 230 V Gleichspannung beschichtet. Die Badtemperatur wird mit 25 °C gehalten.

Anschließend wird das Blech entnommen und wie in 1.1 beschrieben gespült und abgeblasen.

Nach einer Einbrenndauer von 30 Minuten bei 180°C erhält man so eine etwa 19 μm starke Beschichtung die einen glatten silberglänzenden Metalleffekt aufweist und gute Oberflächeneigenschaften besitzt.

## 2.2 Beschichtung kupferfarbig

Das Bindemittel setzt sich wie unter 2.1 beschrieben zusammen.

In 76,35 Gew.-Teile dieses Bindemittels werden 5,76 Gew.-Teile Octa-Soligen-Blei 31 flüssig, 8,94 Gew.-Teile Iriodin 400 Colibri rotbraun, 5,36 Gew.-Teile Iriodin 205 sowie 3,59 Gew.-Teile Iriodin 101 Rutilsilber gegeben und gut verrührt.

Zur Neutralisation werden 2,77 Gew.-Teile einer 50 %igen Ameisensäure zugesetzt und das Gemisch mit vollentsalztem Wasser auf einen Festkörpergehalt von 10 % eingestellt.

In diesem Bad wird ein als Kathode geschaltetes zinkphosphatiertes Stahlblech 3 Minuten bei einer Gleichspannung von 250 V beschichtet (T = 25 °C),

Nach Abspülen, Abblasen und Einbrennen für 30 Minuten bei 180°C erhält man so einen kupferfarbigen, metallisch erscheinenden Überzug mit einer Schichtstärke von 24 µm.

## 2.3 Beschichtung bronzefarbig

Das Basismaterial setzt sich wie folgt zusammen:

81,29 Gew.-Teile des in 2.1 beschriebenen Bindemittels,

6,32 Gew.-Teile Octa-Soligen-Blei 31 flüssig,

7,89 Gew.-Teile Iriodin 205,

2,25 Gew.-Teile der in 2.1 beschriebenen Russ FW-200-Paste,

2,25 Gew.-Teile einer 20% Bayferrox 180-M-Paste in Bindemittel A3).

Zur Neutralisation werden 2,57 Gew.-Teile 50%ige Ameisensäure zugesetzt und das gesamte Gemisch auf einen Festkörpergehalt von 10 % mit vollentsalztem Wasser verdünnt.

Nach der kathodischen Beschichtung eines zinkphosphatierten Stahlblechs in dem so erhaltenen Bad (Bedingungen: 2 Minuten, 270 V Gleichspannung, 25 °C) und anschließendem Einbrennen bei 180 °C 30 Minuten erhält man einen bronzeartigen Überzug in einer Schichtstärke von etwa 10 µm.

## 2.4 Beschichtung zinnfarbig

In 86,49 Gew.-Teile des in 2.1 beschriebenen Bindemittels werden 5,22 Gew.-Teile Iriodin 101 Rutilsilber, 1,56 Gew.-Teile der in 2.1 beschriebenen Russ FW-200-Paste sowie 6,73 Gew.-Teile Octa-Soligen-Blei 31 flüssig gegeben und das gut gerührte Gemisch mit 2,55 Gew.-Teile 50 %iger Ameisensäure neutralisiert.

Anschließend wird mit vollentsalztem Wasser auf einen Festkörpergehalt von 10 % verdünnt und in diesem Bad ein als Kathode geschaltetes zinkphosphatiertes Stahlblech für 2 Minuten bei 270 V Gleichspannung beschichtet (Badtemperatur 25°C). Nach dem Abspülen, Abblasen und Einbrennen (30 Minuten/180°C) erhält man eine ca. 11 µm starke, zinnartige Beschichtung.

## 2.5 Beschichtung silberfarbig

Das Bindemittel A5) wird mit Ethylenglykolmonobutylether auf einen Festkörpergehalt von 60% verdünnt.

61,22 Gew.-Teile dieses Bindemittels werden mit 9,10 Gew.-Teilen des Vernetzers B2), 3,30 Gew.Teilen Octa-Soligen-Blei 31 flüssig, 5,87 Gew.-Teilen Ethylenglykolmonoethylether, 5,90 Gew.-Teilen Ethylenglykolmonobutylether, 4,20 Gew.-Teilen Iriodin 101 Rutilsilber, 4,20 Gew.-Teilen Iriodin 105 und 0,01 Gew.-Teilen Colanylschwarz PR gründlich vermischt und 1,20 Gew.-Teile 50 %ige Ameisensäure sowie 5,00 Gew.-Teile vollentsalztes Wasser zugesetzt.

Es wird auf einen Festkörpergehalt von 10 % mit vollentsalztem Wasser verdünnt.

In diesem Bad wird ein als Kathode geschaltetes zinkphosphatiertes Stahlblech bei einer Temperatur von 25 °C 2 Minuten lang bei einer Gleichspannung von 230 V beschichtet.

Nach dem Abspülen und Abblasen wird 20 Minuten bei 170°C eingebrannt, und man erhält eine gleichmäßige, silbermetallisch glänzende Beschichtung mit hervorragenden Oberflächeneigenschaften. Die Schichtstärke liegt zwischen 16 und 18 µm.

## 2.6 Beschichtung silberfarbig

Das Bindemittel A6) wird mit Ethylenglykolmonoethylether auf einen Festkörpergehalt von 70% verdünnt und zu 75,40 Gew.-Teilen dieses verdünnten Bindemittels folgende Komponenten zugegeben:

8,00 Gew.-Teile Vernetzer B1)

2,27 Gew.-Teile sekundäres Butanol

**10**

2,27 Gew.-Teile Dekanol

5,60 Gew.-Teile Iriodin 101 Rutilsilber

5,60 Gew.-Teile Iriodin 105

0,05 Gew.-Teile Colanylschwarz PR

0,75 Gew.-Teile konzentrierte Essigsäure

Das Gemisch wird gut verrührt und mit vollentsalztem Wasser auf einen Festkörpergehalt von 10 % verdünnt.

Nach den wie in 2.5 beschriebenen Abscheide- und Einbrennbedingungen erhält man einen einwandfreien silbermetallisch glänzenden Überzug in einer Schichtstärke zwischen 16 und 18 µm.

## Patentansprüche

1. Verfahren zur Herstellung eines Gegenstandes mit einem Metallglanzeffektpigmente enthaltenden Lacküberzug durch Elektrotauchlackierung des eine elektrisch leitende Oberfläche aufweisenden Gegenstandes mit einem wässrigen Elektrotauchlack-Überzugsmittel enthaltend durch Elektrotauchlackierung abscheidbare organische Bindemittel, Farbpigmente und/oder Farbstoffe und gegebenenfalls übliche lacktechnische Zusatzstoffe, dadurch gekennzeichnet, daß das Elektrotauchlack-Überzugsmittel Interferenzpigmente aus mit Titandioxid beschichteten Glimmerplättchen enthält.

2. Verfahren gemäß Anspruch 1, dadurch gekennzeichnet, daß die Glimmerplättchen eine Dicke von 150 bis 400 nm, und eine Breite von 5 bis 150 µm und eine Länge von 5 bis 150 µm aufweisen, und die Titandioxidbeschichtung eine Stärke von 40 bis 300 nm hat.

## Claims

1. Process for producing an article with a varnish coating containing pigments giving a metallic effect by electro-dip coating said article having an electrically conducting surface with an aqueous electro-dip coating agent containing organic binding agents, colouring pigments and/or dyes and optionally additives conventional in lacquer technology, characterized in that the electro-dip coating agent contains interference pigments comprising mica plates coated with titanium dioxide.

2. Process according to claim 1, wherein the mica plates have a thickness of 150 to 400 nm and a width of 5 to 150 µm and a length of 5 to 150 µm, and the titanium dioxide coating has a thickness of 40 to 300 nm.

## Revendications

1. Procédé de fabrication d'un objet comportant un revêtement en laque contenant des pigments pour effet de brillant métallique, par laquage par électro-immersion de l'objet, comprenant une surface électriquement conductrice, avec un agent aqueux de revêtement par laquage par électro-immersion, contenant des liants organiques, pouvant être séparés par laquage par électro-immersion, des pigments colorés et/ou des colorants et le cas échéant des additifs classiques du domaine technique du laquage, caractérisé en ce que l'agent de revêtement par laquage par électro-immersion contient des pigments d'interférence contenant des plaquettes de mica recouvertes de dioxyde de titane.

2. Procédé selon la revendication 1, caractérisé en ce que les plaquettes de mica ont une épaisseur de 150 à 400 nm et une largeur de 5 à 150 µm et une longueur de 5 à 150 µm, et le revêtement de dioxyde de titane a une épaisseur de 40 à 300 nm.